# FASCICULE DE BREVET EUROPEEN

(11) **EP 2 893 278 B1**
(45) Date de publication et mention de la délivrance du brevet: **01.02.2017**
(21) Numéro de dépôt: 13766603.8
(22) Date de dépôt: 02.09.2013
(51) Int. Cl.: F28D 9/00, F28F 3/04, B23P 15/26

(54) **ÉLÉMENT D'ÉCHANGEUR POUR ÉCHANGEUR DE CHALEUR, ÉCHANGEUR DE CHALEUR COMPRENANT UN TEL ÉLÉMENT D'ÉCHANGEUR ET PROCÉDÉ DE FABRICATION D'UN TEL ÉLÉMENT D'ÉCHANGEUR**
AUSTAUSCHELEMENT FÜR EINEN WÄRMETAUSCHER, WÄRMETAUSCHER MIT EINEM SOLCHEN AUSTAUSCHELEMENT UND VERFAHREN ZUR HERSTELLUNG EINES SOLCHEN AUSTAUSCHELEMENTS
EXCHANGER ELEMENT FOR A HEAT EXCHANGER, HEAT EXCHANGER COMPRISING SUCH AN EXCHANGER ELEMENT AND METHOD FOR THE PRODUCTION OF SUCH AN EXCHANGER ELEMENT

(30) Priorité: 05.09.2012 FR 1258284
(43) Date de publication de la demande: 15.07.2015
(73) Titulaire: L'Air Liquide Société Anonyme pour l'Etude et l'Exploitation des Procédés Georges Claude, 75007 Paris (FR)
(72) Inventeur: CRAYSSAC, Frédéric, F-78140 Velizy (FR); WAGNER, Marc, F-94100 Saint Maur des Fosses (FR)
(74) Mandataire: Mercey, Fiona Susan
(86) Numéro de dépôt international: PCT/FR2013/052009
(87) Numéro de publication internationale: WO 2014/037656

(56) Documents cités:
- EP-A2- 2 431 700
- WO-A1-88/06941
- WO-A1-97/24572
- DE-C1- 19 801 374
- US-A- 1 662 870

## Description

La présente invention concerne un élément d'échangeur conforme au préambule de la revendication 1 pour un échangeur de chaleur destiné à transférer de la chaleur d'au moins un fluide primaire dit fluide calorigène vers au moins un fluide secondaire dit fluide frigorigène. De plus, la présente invention concerne un échangeur de chaleur, pour une unité de séparation de gaz par cryogénie, et comprenant plusieurs éléments d'échangeur selon l'invention. Par ailleurs, la présente invention concerne un procédé de fabrication pour fabriquer un tel élément d'échangeur. Un tel échangeur est connu du document US 1,662,870.

La présente invention trouve notamment application dans le domaine de la séparation de gaz par cryogénie, en particulier de la séparation d'air par cryogénie (connue sous l'acronyme anglais « ASU » pour unité de séparation d'air) exploitée pour la production d'oxygène gazeux sous pression.

US6951245B1 décrit un échangeur de chaleur pour transférer de la chaleur d'un fluide calorigène vers un fluide frigorigène. L'échangeur de chaleur comporte plusieurs plaques, des nervures s'étendant en saillie sur chaque plaque, ainsi que des barres de fermeture s'étendant autour des plaques.

Les plaques ont pour fonction de supporter les nervures et de canaliser du fluide, calorigène ou frigorigène. Les nervures ont pour fonction de former des canaux pour l'écoulement de fluide, calorigène ou frigorigène. Les barres de fermeture périphériques ont pour fonction d'obturer les canaux.

Dans l'échangeur de chaleur d'US6951245B1, les plaques, les nervures et les barres de fermeture sont solidarisées entre elles au moyen de brasure. En d'autres termes, les nervures et les barres de fermeture sont brasées sur les plaques.

Cependant, un tel échangeur de chaleur de l'art antérieur présente des risques de défauts de fabrication, car il est difficile de maîtriser le procédé de brasage. En particulier, certaines brasures pourraient être défectueuses. De tels défauts de fabrication entraînent des risques de défaillance de l'échangeur de chaleur. Ces risques de défaillance augmentent avec la pression de service prévue pour les fluides. Pour certaines applications, les fluides peuvent atteindre une pression comprise entre 50 bars et 100 bars.

En outre, lors de la séparation d'air par cryogénie dans un échangeur de chaleur en alliage d'aluminium, l'écoulement d'oxygène sous haute pression peut causer une inflammation directe de l'alliage d'aluminium sur un point chaud créé localement par une déformation plastique, une rupture de brasure, un impact de particules, des frottements d'écoulement etc. Or, le risque d'inflammation directe augmente avec la pression de service.

La présente invention vise notamment à résoudre, en tout ou partie, les problèmes mentionnés ci-avant.

À cet effet, l'invention a pour objet un élément d'échangeur, pour échangeur de chaleur destiné à transférer de la chaleur d'au moins un fluide primaire dit fluide calorigène vers au moins un fluide secondaire dit fluide frigorigène, l'élément d'échangeur comportant :
- au moins une plaque qui est pleine ;
- des nervures qui s'étendent en saillie sur au moins une face de la plaque, chaque nervure formant au moins une portion d'une paroi d'un canal respectif adapté pour l'écoulement de fluide calorigène ou de fluide frigorigène ; et
- des barres de fermeture s'étendant suivant des bords de la plaque de façon à obturer au moins une partie des canaux ;
l'élément d'échangeur étant caractérisé en ce que la plaque, au moins une partie des nervures et au moins une partie des barres de fermeture sont monoblocs.

En d'autres termes, la plaque, au moins une partie des nervures et au moins une partie des barres de fermeture sont réalisées en une seule pièce, donc composées d'un seul et même matériau. Les composants de l'élément d'échangeur sont donc solidaires, et ils ne nécessitent pas ou peu de brasure.

Ainsi, un tel élément d'échangeur présente une résistance mécanique très élevée, ce qui permet à l'échangeur de chaleur de fonctionner sous des pressions de fluide calorigène et/ou frigorigène supérieures à 50 bar A, voire à 80 bar A, voire même à 100 bar A. En outre, comme un tel élément d'échangeur comprend peu ou pas de brasures, le risque d'inflammation directe est réduit dans le cas de la séparation d'air.

Dans la présente demande, le terme « pleine » désigne une plaque qui est massive, c'est-à-dire dépourvue de creux ou de cavités.

Selon l'invention, la plaque, toutes les nervures et toutes les barres de fermeture sont monoblocs.

US-A-1662870 présente un élément d'échangeur selon le préambule de la revendication 1 mais ne présente pas de canaux de distribution permettant un échange de fluides.

Selon un objet de l'invention, il est prévu un élément d'échangeur selon la revendication 1.

Ainsi, un tel élément d'échangeur présente une résistance mécanique particulièrement élevée, ce qui permet à l'échangeur de chaleur de fonctionner sous des pressions de fluide calorigène et/ou frigorigène supérieures à 50 bar A, voire à 80 bar A, voire même à 100 bar A.

Selon une variante du mode de réalisation précédent, les barres de fermeture sont agencées de sorte que tous les bords de la plaque sont longés par au moins une barre de fermeture. Ainsi, l'échangeur de chaleur est étanche sur chacun de ses bords au moyen de barres de fermeture monoblocs, donc mécaniquement résistantes.

Selon un mode de réalisation de l'invention, la plaque a globalement la forme d'un rectangle, l'élément d'échangeur comportant quatre barres de fermeture s'étendant respectivement le long des quatre bords de la plaque.

Ainsi, avec des plaques rectangulaires, l'échangeur de chaleur présente des faces planes formées par l'empilement des bords rectilignes des plaques, ce qui simplifie son assemblage avec des boîtes d'entrée de fluides et des boîtes de sortie de fluides.

Selon un mode de réalisation de l'invention, une seule face de la plaque comporte des nervures.

Ainsi, la tolérance de fabrication de chaque nervure est relativement grande, car les nervures de l'élément d'échange sont directement en contact avec la plaque de l'élément d'échange superposé.

Selon un mode de réalisation de l'invention, les deux faces de la plaque comportent des nervures.

Ainsi, un tel élément d'échange a une densité de nervures élevée, et il offre donc de grandes surfaces pour l'échange de chaleur.

Selon une forme de réalisation du mode de réalisation précédent, les nervures de la première face sont décalées par rapport aux nervures de la deuxième face, les nervures étant de préférence uniformément répartis sur chaque face.

En d'autres termes, les nervures de la première face ne sont pas situées au droit des nervures de la deuxième face.

Ainsi, un tel agencement décalé des nervures permet d'atteindre une densité très élevée de nervures dans l'échangeur de chaleur. En effet, deux éléments d'échangeur consécutifs peuvent être superposés avec leurs nervures respectives distantes, ce qui forme de nombreux canaux.

Selon une variante de l'invention, les nervures ont des sections transversales rectangulaires et semblables entre elles.

Selon une variante de l'invention, des rainures sont de section variable suivant le mode fabrication (usinage mécanique, roulage ou usinage chimique )

Ainsi, de telles nervures ont des formes relativement simples à réaliser. Selon une variante de l'invention, sur une première face de la plaque, deux nervures consécutives sont distantes d'un premier pas, et sur une deuxième face de la plaque, deux nervures consécutives sont distantes d'un deuxième pas qui est supérieur au premier pas, de préférence compris entre 1 fois et 2 fois le premier pas. Ainsi, de telles nervures permettent de former des canaux, par empilement des éléments d'échangeur, qui ont des largeurs différentes, suivant la nature, le débit et/ou la pression du fluide à canaliser.

Selon une variante de l'invention, sur chaque face de la plaque, une nervure latérale, qui est la nervure la plus proche d'un bord de la plaque, est distante de la barre de fermeture correspondante d'environ 1 fois le pas, et la nervure latérale opposée, qui est la nervure la plus proche du bord opposé de la plaque, est distante de la barre de fermeture correspondante d'environ 2 fois le pas. Ainsi, on peut alterner un élément d'échangeur tourné vers le haut avec un élément d'échangeur identique tourné vers le bas, ce qui permet de former des canaux de largeurs différentes entre les deux faces de la plaque.

Selon une variante de l'invention, les nervures d'une première face de la plaque ont une première hauteur, les nervures de la deuxième face de la plaque ont une deuxième hauteur, la deuxième hauteur étant différente de la première hauteur. Ainsi, on peut adapter les nervures en fonction de la nature, le débit et/ou la pression d'un premier fluide et d'un deuxième fluide à canaliser.

Selon un mode de réalisation de l'invention, chaque nervure a une largeur comprise entre 0,3 mm et 1,6 mm, de préférence entre 0,4 mm et 1,5 mm, chaque nervure a une hauteur comprise entre 0,8 mm et 2,7 mm, de préférence entre 1,0 mm et 2,5 mm, et la plaque a une épaisseur comprise entre 0,6 mm et 1,7 mm, de préférence entre 0,8 mm et 1,5 mm.

Ainsi, une telle largeur de nervure confère à chaque nervure une résistance mécanique élevée, ce qui permet notamment de diminuer le risque d'inflammation de l'aluminium, lorsqu'un fluide est de l'oxygène, car l'élément d'échangeur monobloc peut être fabriqué avec une largeur de nervure plus grande que dans l'art antérieur.

Ainsi, une telle largeur de nervure confère à la plaque une résistance mécanique élevée, ce qui permet notamment de diminuer le risque d'inflammation de l'aluminium, lorsqu'un fluide est de l'oxygène, car l'élément d'échangeur monobloc peut être fabriqué avec une plaque plus épaisse que dans l'art antérieur

Selon une variante de l'invention, des nervures présentent des encoches agencées de manière à permettre une communication entre des canaux consécutifs. Ainsi, de telles encoches permettent l'écoulement de fluide calorigène ou de fluide frigorigène entre deux canaux consécutifs.

Selon une variante de l'invention, les nervures sont agencées de sorte que chaque canal a une largeur comprise entre 0,8 mm et 1,2 mm. Ainsi, des tels canaux permettent d'assurer des débits élevés de fluide calorigène et de fluide frigorigène.

Selon un mode de réalisation de l'invention, le matériau formant la plaque, les nervures et les barres de fermeture monoblocs est sélectionné dans le groupe constitué par du cuivre, des alliages de cuivre, d'un acier inoxydable, de l'aluminium, les alliages d'aluminium en particulier de nuance 3003, 3004, 3104 et 3005, les alliages de brasage plaqués 4004, 4104, 4343, 4045, 4047A et leur association avec ceux de la famille 3000

Ainsi, un tel matériau permet de réaliser un élément d'échange mécaniquement résistant.

Selon une variante de l'invention, l'élément d'échangeur comprend de la brasure disposée sur des nervures et/ou sur au moins une barre de fermeture. De manière alternative ou complémentaire, l'élément d'échangeur comprend de la brasure disposée sur une face de la plaque dépourvue de nervures, le cas échéant. Ainsi, une telle brasure permet de solidariser les éléments d'échangeur deux à deux.

Selon un mode de réalisation de l'invention, des nervures s'étendent, en saillie sur au moins une face de la plaque, parallèlement entre elles de façon à former des parois de canaux dits d'échange parallèles entre eux.

Ainsi, de tels canaux d'échange parallèles permettent de faire circuler du fluide calorigène ou du fluide frigorigène avec relativement peu de pertes de charge et sur la majeure partie de la longueur de la plaque.

Selon une forme de réalisation du mode de réalisation précédent, les canaux de distribution s'étendent suivant des angles compris entre 45° et 90° par rapport aux canaux d'échange.

Ainsi, un tel agencement des nervures permet de privilégier la distribution de fluide calorigène et de fluide frigorigène, car la perte de charge générée dans la région des canaux d'échange est supérieure à la perte de charge générée dans chaque région des canaux de distribution.

Selon une variante du mode de réalisation précédent, le diamètre hydraulique des canaux de distribution est supérieur au diamètre hydraulique des canaux d'échange. Ainsi, de tels diamètres hydrauliques permettent de faciliter la distribution de fluide calorigène et de fluide frigorigène, car la perte de charge générée dans la région des canaux d'échange est supérieure à la perte de charge générée dans chaque région des canaux de distribution. Les diamètres hydrauliques peuvent être variables au gré des canaux d'échange alimentés (cas des canaux usinés chimiquement).

Selon une forme de réalisation des deux modes de réalisation précédents :
- la première face de la plaque comporte des nervures formant des parois de canaux d'échange parallèles ; et
- la deuxième face de la plaque comporte i) des nervures formant des parois de canaux d'échange ainsi que ii) des nervures formant des parois de canaux de distribution transversaux aux canaux d'échange.

Ainsi, un tel élément d'échangeur « hybride » a une face qui remplit uniquement la fonction d'échange de chaleur, tandis que l'autre face remplit aussi une fonction de distribution de fluides.

Par ailleurs, la présente invention a pour objet un échangeur de chaleur, pour une unité de séparation de gaz par cryogénie, comprenant plusieurs éléments d'échangeur empilés et solidarisés entre eux, par exemple au moyen de brasure, de sorte que les plaques s'étendent parallèlement entre elles, l'échangeur de chaleur étant caractérisé en ce qu'il comprend plusieurs éléments d'échangeur selon l'invention, de préférence tous les éléments d'échangeur sont selon l'invention.

Ainsi, un tel échangeur de chaleur présente une résistance mécanique très élevée, ce qui lui permet de fonctionner sous des pressions de fluide calorigène et/ou frigorigène supérieures à 50 bar A, voire à 80 bar A, voire même à 100 bar A.

Selon une forme de réalisation du mode de réalisation précédent, des éléments d'échangeur précités à canaux d'échange sont empilés en alternance avec des éléments d'échangeur précités à canaux de distribution et canaux d'échange.

En d'autres termes, cet échangeur de chaleur comprend un empilement d'éléments d'échangeur dont au moins un sur deux a des canaux de distribution.

Ainsi, de tels canaux de distribution permettent de distribuer le fluide calorigène ou le fluide frigorigène vers les canaux d'échange où se produit essentiellement l'échange de chaleur.

Par ailleurs, la présente invention a pour objet un procédé de fabrication, pour fabriquer un élément d'échangeur pour un échangeur de chaleur destiné à transférer de la chaleur d'au moins un fluide primaire dit fluide calorigène vers au moins un fluide secondaire dit fluide frigorigène, le procédé de fabrication comprenant les étapes :
- une première étape éventuelle d'usinage chimique de certaines zones des plaques (ex distribution) ;
- presser et déplacer un outil contre au moins une face de l'ébauche de plaque avec une pression permettant de déformer plastiquement l'ébauche de plaque, de façon à former des premières nervures, formant des parois de canaux d'échange, qui s'étendent en saillie sur au moins une première face d'une plaque issue de l'ébauche de plaque ;
- presser et déplacer l'outil contre ladite au moins une première face de l'ébauche de plaque, de façon à former des nervures formant des parois des canaux de distribution et
- déformer plastiquement l'ébauche de plaque, de façon à former des barres de fermeture s'étendant suivant des bords de la plaque issue de l'ébauche de plaque.

Ainsi, un tel procédé de fabrication permet de fabriquer, à partir d'une ébauche de plaque et de manière rapide, un élément d'échangeur selon l'invention qui a une résistance mécanique très élevée et qui a des canaux d'échange et des canaux de distribution.

Selon une variante de l'invention, l'ébauche de plaque a une épaisseur supérieure à 1 mm. Ainsi, une telle épaisseur permet de fabriquer une plaque ayant une résistance mécanique très élevée, car la plaque est relativement épaisse.

Selon un mode de réalisation de l'invention, l'outil comprend au moins deux roulettes coaxiales et séparées d'une distance correspondant à une largeur d'une nervure, les roulettes se déplaçant par roulement contre ladite au moins une face de l'ébauche de plaque.

Ainsi, de telles roulettes permettent de réaliser des nervures de manière précise et rapide.

Les modes de réalisation de l'invention et les variantes de l'invention mentionnés ci-avant peuvent être pris isolément ou selon toute combinaison techniquement possible.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue en perspective, avec transparence, d'une partie d'un élément d'échangeur selon l'art antérieur ;
- la figure 2 est une vue de dessus de l'élément d'échangeur de la figure 1 ;
- la figure 3 est une vue similaire à la figure 2 d'un élément d'échangeur conforme à l'invention ;
- la figure 4 est une vue de dessus, avec troncature, d'un élément d'échangeur conforme à l'invention ; et
- la figure 5 est une vue en section d'une partie d'un échangeur de chaleur comprenant un élément d'échangeur qui ne fait pas partie de l'invention.

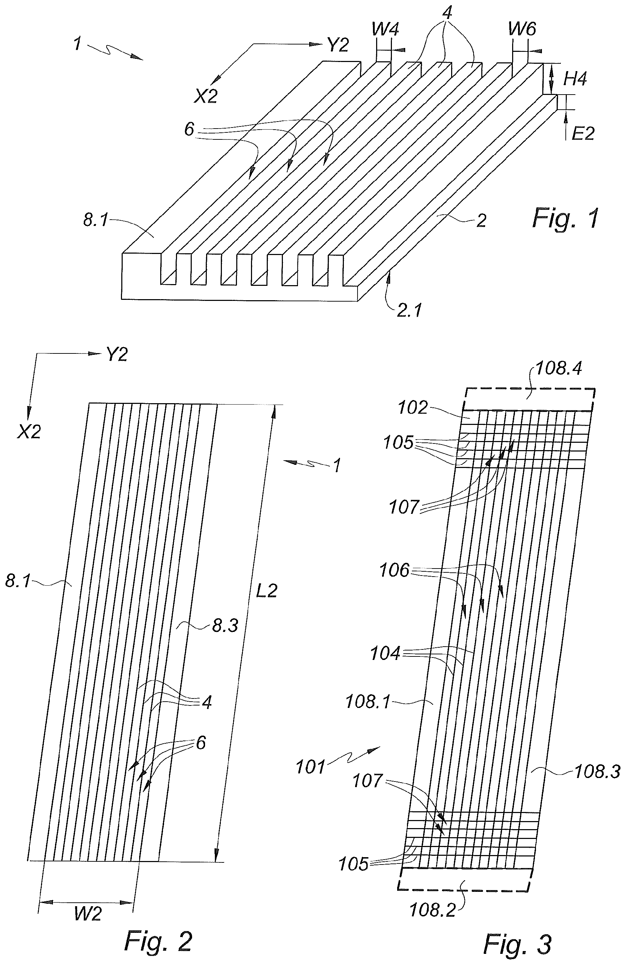

La figure 1 illustre une partie d'un élément d'échangeur 1 adapté pour composer un échangeur de chaleur destiné à transférer de la chaleur d'au moins un fluide primaire dit fluide calorigène vers au moins un fluide secondaire dit fluide frigorigène.

Comme le montrent les figures 1 et 2, l'élément d'échangeur 1 comporte une plaque 2, des nervures 4 et des barres de fermeture 8.1 et 8.3. La plaque 2, les nervures 4 et les barres de fermeture 8.1 et 8.3 sont monoblocs. Dans l'exemple des figures 1 et 2, la plaque 2, toutes les nervures 4 et toutes les barres de fermeture 8.1 et 8.3 sont monoblocs. Usuellement, les nervures sont aussi dénommées « ailettes ». Usuellement, la plaque est aussi dénommée « base ».

En d'autres termes, la plaque 2, les nervures 4 et les barres de fermeture 8.1 et 8.3 sont réalisées en une seule pièce, donc composées d'un seul et même matériau. Dans l'exemple des figures 1 et 2, le matériau formant l'ensemble monobloc composé de la plaque 2, les nervures 4 et les barres de fermeture 8.1 et 8.3 est ici un alliage d'aluminium de nuance 3003.

La plaque 2 est pleine, plate et elle a globalement la forme d'un rectangle. Les bords de la plaque 2 s'étendent respectivement suivant une direction longitudinale X2 et une direction latérale Y2.

Les nervures 4 s'étendent ici en saillie sur une seule face de la plaque 2. La face opposée 2.1 est dépourvue de nervures. Chaque nervure 4 forme une portion d'une paroi d'un canal respectif 6. Les nervures ont ici des sections transversales, dans un plan perpendiculaire à la direction longitudinale X2, qui sont rectangulaires et semblables entre elles.

Chaque canal 6 est adapté pour l'écoulement de fluide calorigène ou de fluide frigorigène. Comme les nervures 4 s'étendent parallèlement entre elles et à la direction longitudinale X2, les canaux 6 sont parallèles entre eux et à la direction longitudinale X2.

Chaque canal 6 est délimité par une nervure 4 de l'élément d'échangeur 1, par une nervure de l'élément d'échangeur adjacent et par la plaque 2, laquelle définit le « fond » du canal 6.

En service, chaque canal 6 canalise du fluide calorigène ou du fluide frigorigène, selon qu'il est alimenté en fluide calorigène ou en fluide frigorigène. Les canaux 6 sont dits canaux d'échange, car ils contribuent à remplir la fonction de transfert de chaleur entre du fluide calorigène et du fluide frigorigène par l'intermédiaire notamment de la plaque 2.

Comme le montre la figure 2, l'élément d'échangeur 1 comporte deux barres de fermeture 8.1 et 8.3. Les barres de fermeture 8.1 et 8.3 s'étendent respectivement le long de deux bords de la plaque 2. Les barres de fermeture 8.1 et 8.3 s'étendent parallèlement à la direction longitudinale X2.

Les barres de fermeture 8.1 et 8.3 s'étendent suivant des bords de la plaque 2 de façon à obturer des canaux 6. Les barres de fermeture 8.1, et 8.3 bordent, donc obturent respectivement un canal 6 situé près d'un bord latéral de la plaque 2.

Les barres de fermeture 8.1 et 8.3 sont ici agencées de sorte que tous les bords de la plaque 2 sont longés par une barre de fermeture respective 8.1 et 8.3. Alternativement, chaque bord de la plaque 2 peut être longé par plusieurs barres de fermeture distinctes. Alternativement encore, en tant que de besoin, au moins un bord de la plaque peut présenter un tronçon de sa longueur qui n'est pas longé par une barre de fermeture.

De plus, de manière connue en soi mais non représentée, chaque barre de fermeture peut comporter une ouverture, usuellement dénommée « fenêtre », pour introduire ou évacuer du fluide respectivement dans ou hors des canaux.

Dans l'exemple des figures 1 et 2, la plaque 2 a une épaisseur E2 d'environ 1,2 mm. Chaque nervure 4 a une largeur W4 d'environ 0,5 mm et une hauteur H4 d'environ 1,8 mm. Chaque canal 6 a une largeur W6 d'environ 1,0 mm.

La plaque 2 a une longueur L2 d'environ 6 m, mesurée suivant la direction longitudinale X2. La plaque 2 a une largeur W2 d'environ 2,5 m, mesurée suivant la direction transversale Y2.

L'élément d'échangeur 1 comprend de la brasure disposée sur les nervures 4 et sur les barres de fermeture 8.1 et 8.3. Cette brasure forme une couche d'environ 0,1 mm d'épaisseur. En complément, l'élément d'échangeur 1 comprend de la brasure disposée sur la face 2.1 de la plaque 2, c'est-à-dire la face dépourvue de nervures. Ces couches de brasure permettent de solidariser entre eux plusieurs éléments d'échangeurs empilés et chauffés dans un four à vide, de manière connue en soi.

La figure 3 illustre un élément d'échangeur 101 conforme à l'invention. Dans la mesure où l'élément d'échangeur 101 est similaire à l'élément d'échangeur 1, la description de l'élément d'échangeur 1 donnée ci-avant en relation avec les figures 1 et 2 peut être transposée à l'élément d'échangeur 101, à l'exception des différences notables énoncées ci-après.

Un composant de l'élément d'échangeur 101 identique ou correspondant, par sa structure ou par sa fonction, à un composant de l'élément d'échangeur 1 porte la même référence numérique augmentée de 100. On définit ainsi une plaque 102, des nervures 104 définissant des canaux d'échange 106, ainsi que des barres de fermeture 108.1, 108.2, 108.3 et 108.4.

L'élément d'échangeur 101 diffère de l'élément d'échangeur 1, notamment car l'élément d'échangeur 101 a des nervures 105 qui sont agencées, en saillie sur une face de la plaque 102, de façon à former des parois de deuxièmes canaux dits canaux de distribution 107, de sorte que les canaux de distribution 107 s'étendent transversalement aux canaux d'échange 106. Comme le montre la figure 3, les canaux de distribution 107 s'étendent suivant des angles d'environ 90° par rapport aux canaux d'échange 106.

L'agencement des nervures 105 permet de privilégier la distribution de fluide calorigène ou de fluide frigorigène, car la perte de charge générée dans la région des canaux d'échange 106 est supérieure à la perte de charge générée dans chaque région des canaux de distribution 107.

De plus, l'élément d'échangeur 101 diffère de l'élément d'échangeur 1, car l'élément d'échangeur 101 comporte quatre barres de fermeture 108.1, 108.2, 108.3, 108.4 qui s'étendent respectivement le long des quatre bords de la plaque 102. Les barres de fermeture 108.1, 108.2, 108.3, 108.4 sont parallèles deux à deux.

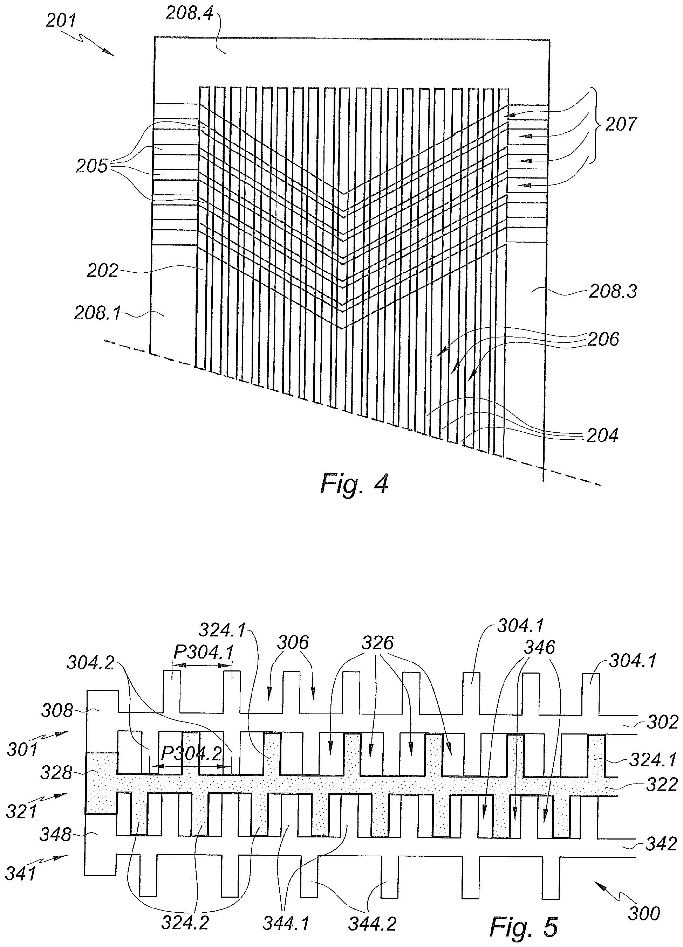

La figure 4 illustre un élément d'échangeur 201 conforme à l'invention. Dans la mesure où l'élément d'échangeur 201 est similaire à l'élément d'échangeur 101, la description de l'élément d'échangeur 101 donnée ci-avant en relation avec la figure 3 peut être transposée à l'élément d'échangeur 201, à l'exception des différences notables énoncées ci-après.

Un composant de l'élément d'échangeur 201 identique ou correspondant, par sa structure ou par sa fonction, à un composant de l'élément d'échangeur 101 porte la même référence numérique augmentée de 100. On définit ainsi une plaque 202, des nervures 204 définissant des canaux d'échange 206, ainsi que des barres de fermeture 208.1, 208.3 et 208.4 et équivalent, représentées en tirets.

L'élément d'échangeur 201 diffère de l'élément d'échangeur 101, notamment car l'élément d'échangeur 201 a des nervures 205 qui sont agencées, en saillie sur une face de la plaque 202, de façon à former des parois de canaux de distribution 207, de sorte que les canaux de distribution 207 s'étendent obliquement aux canaux d'échange 206. Comme le montre la figure 4, les canaux de distribution 207 s'étendent suivant des angles d'environ 45° par rapport aux canaux d'échange 206.

L'agencement des nervures 205 permet de privilégier davantage la distribution de fluide calorigène ou de fluide frigorigène, car la perte de charge générée dans la région des canaux d'échange 206 est supérieure à la perte de charge générée dans chaque région des canaux de distribution 207.

Pour alimenter l'élément d'échangeur 201 ou l'élément d'échangeur 101, un échangeur de chaleur conforme à l'invention comprend en outre des boîtes d'alimentation non représentées qui sont solidarisées, par exemple par soudure, sur des faces externes respectives de l'échangeur de chaleur.

Ainsi, de telles boîtes d'alimentation permettent l'entrée ou la sortie de fluide calorigène ou de fluide frigorigène dans ou hors des canaux de distribution 107 ou 207, donc dans ou hors des canaux d'échange 106 ou 206.

Dans l'exemple des figures 3 et 4, les boîtes d'alimentation peuvent être disposées sur les portions d'extrémités longitudinales de l'élément d'échangeur 101 ou 201, de sorte que ces boîtes d'alimentation sont raccordées fluidiquement aux passages définis par l'ensemble des canaux de distribution 107 ou 207.

La figure 5 illustre un échangeur de chaleur 300 pour composer une unité non représentée de séparation de gaz par cryogénie. L'échangeur de chaleur 300 comprend plusieurs éléments d'échangeur 301, 321, 341 etc. conformes à l'invention, qui sont empilés et solidarisés entre eux au moyen de brasure.

Dans la mesure où l'élément d'échangeur 301, 321 ou 341 est similaire à l'élément d'échangeur 1 ou 101, la description de l'élément d'échangeur 1 ou 101 donnée ci-avant en relation avec les figures 1, 2 ou 3 peut être transposée à l'élément d'échangeur 301, 321 ou 341, à l'exception des différences notables énoncées ci-après.

Un composant de l'élément d'échangeur 301, 321 ou 341 identique ou correspondant, par sa structure ou par sa fonction, à un composant de l'élément d'échangeur 1 ou 101 porte la même référence numérique augmentée de 100 ou 200. On définit ainsi des plaques 302, 322, 342, des canaux d'échange 306, 326, 346 et des barres de fermeture 308, 328, 348.

La figure 5 illustre une section transversale dans un plan perpendiculaire à la direction longitudinale et passant par la région médiane des éléments d'échangeur 301, 321 ou 341, c'est-à-dire une région présentant seulement des canaux d'échange 306, 326 et 346. Les plaques 302, 322, 342 s'étendent parallèlement entre elles.

L'élément d'échangeur 301, 321 ou 341 diffère de l'élément d'échangeur 101, notamment car l'élément d'échangeur 301, 321 ou 341 a des nervures qui s'étendent en saillie sur les deux faces de la plaque respective 302, 322 ou 342.

Ainsi, l'élément d'échangeur 301 a des nervures 304.1 sur une première face et des nervures 304.2 sur sa deuxième face. De même, l'élément d'échangeur 321 a des nervures 324.1 sur une première face et des nervures 324.2 sur sa deuxième face, et l'élément d'échangeur 341 a des nervures 344.1 sur une première face et des nervures 344.2 sur sa deuxième face.

De plus, l'élément d'échangeur 301, 321 ou 341 diffère de l'élément d'échangeur 101, car la première face de la plaque 302, 322 ou 342 comporte des nervures formant des parois de canaux d'échange 306 parallèles. Tandis que la deuxième face de la plaque 302, 322 ou 342 comporte, d'une part, des nervures 304.2, 324.1 formant des parois de canaux d'échange 326 ainsi que, d'autre part, des nervures non représentées formant des parois de canaux de distribution qui sont transversaux par rapport aux canaux d'échange 326 comme les canaux de distribution 207.

En d'autres termes, l'échangeur de chaleur 300 comprend un empilement d'éléments d'échangeur 301, 321, 341 dont un sur deux a des canaux de distribution semblables aux canaux de distribution 207.

En d'autres termes, l'élément d'échangeur 301, 321 ou 341 est « hybride », car il présente seulement des canaux d'échange sur une face, et des canaux d'échange plus des canaux de distribution sur la face opposée.

Alternativement à cet empilement d'éléments d'échangeur hybrides, l'échangeur de chaleur peut comprendre des éléments d'échangeur avec canaux d'échange qui sont empilés en alternance avec des éléments d'échangeur avec canaux de distribution.

Dans l'exemple de la figure 5, les nervures 304.1, 324.1 ou 344.1 de la première face sont décalées par rapport aux nervures respectives 304.2, 324.2 ou 344.2 de la deuxième face. En d'autres termes, les nervures 304.1, 324.1 ou 344.1 de la première face ne sont pas situées au droit des nervures respectives 304.2, 324.2 ou 344.2 de la deuxième face.

Sur une première face de la plaque 302, deux nervures consécutives 304.1 sont distantes d'un premier pas P304.1, et sur une deuxième face de la plaque 302, deux nervures consécutives 304.2 sont distantes d'un deuxième pas P304.2 qui est supérieur au premier pas P304.1.

Dans l'exemple de la figure 5, le deuxième pas P304.2 vaut 1,5 fois le premier pas. Ainsi, les canaux 306 et 326, après empilement des éléments d'échangeur 301 et 321, ont des largeurs différentes.

De plus, sur chaque face de la plaque 302, la nervure latérale 304.1 qui est la nervure la plus proche du bord gauche de la plaque 301 est distante de la barre de fermeture correspondante 308 d'environ 1 fois le pas P304.1. La nervure latérale opposée non représentée, qui est la nervure la plus proche du bord opposé de la plaque 302, est distante de la barre de fermeture correspondante non représentée d'environ 2 fois le pas.

Ainsi, on peut alterner un élément d'échangeur 301 tourné vers le haut avec un élément d'échangeur identique, tel 321, tourné vers le bas, ce qui permet de former des canaux 306 et 326 de largeurs différentes entre les deux faces de la plaque 302.

Pour fabriquer l'élément d'échangeur 1, le procédé de fabrication comprend les étapes :
- apposer un masque ;
- plonger les plaques dans les bains d'usinage chimique ;
- presser et déplacer un outil non représenté contre une face de l'ébauche de plaque avec une pression permettant de déformer plastiquement l'ébauche de plaque, de façon à former les nervures 4 en saillie sur une face de la plaque 2 issue de l'ébauche de plaque ; et
- déformer plastiquement l'ébauche de plaque, de façon à former les barres de fermeture 8 s'étendant suivant les bords de la plaque 2 issue de l'ébauche de plaque.

L'étape de déformation plastique de l'ébauche de plaque est effectuée par déplacement de la matière, mais sans enlèvement de matière.

Selon une étape de ce procédé de fabrication, l'ébauche de plaque a une épaisseur d'environ 2 mm.

Suivant le procédé de fabrication de l'élément selon l'invention, on prévoit plusieurs passages avec des outils différents, de façon à réaliser des nervures par étapes successives. Cela permet de déformer l'ébauche de plaque de manière progressive, ce qui évite les risques de rupture et ce qui limite les efforts à produire et les contraintes sur les outils.

Dans ce procédé, l'outil comprend au moins deux roulettes coaxiales et séparées d'une distance correspondant à une largeur W4 d'une nervure 4. Les roulettes non représentées se déplaçent par roulement contre la face de l'ébauche de plaque. On réalise ainsi toutes les nervures 4.

Selon un procédé de fabrication similaire, pour fabriquer l'élément d'échangeur 201, on réalise les étapes de :
- presser et déplacer l'outil contre la face de l'ébauche de plaque, de façon à former les nervures 204 parallèles et formant des parois des canaux d'échange 206 ; et
- presser et déplacer l'outil contre cette même face de l'ébauche de plaque, de façon à former les nervures 205 formant des parois des canaux de distribution 207.

## Revendications

1. Élément d'échangeur (1 ; 101 ; 201 ; 301, 321, 341), pour échangeur de chaleur (300) destiné à transférer de la chaleur d'au moins un fluide primaire dit fluide calorigène vers au moins un fluide secondaire dit fluide frigorigène, l'élément d'échangeur (1 ; 101 ; 201 ; 301) comportant :
- au moins une plaque (2 ; 102 ; 202 ; 302, 322, 342) qui est pleine ;
- des nervures (4 ; 104 ; 204 ; 304.1, 304.2, 324.1, 324.2, 344.1, 344.2) qui s'étendent en saillie sur au moins une face de la plaque (2 ; 102 ; 202 ; 302), chaque nervure (4 ; 104 ; 204 ; 304.1) formant au moins une portion d'une paroi d'un canal respectif (6 ; 106 ; 206 ; 306, 326, 346) adapté pour l'écoulement de fluide calorigène ou de fluide frigorigène ; et
- des barres de fermeture (8.1, 8.3 ; 108.1, 108.2, 108.3, 108.4 ; 208.1, 208.3, 208.4 ; 308) s'étendant suivant des bords de la plaque (2 ; 102 ; 202 ; 302) de façon à obturer au moins une partie des canaux (6 ; 106 ; 206 ; 306) ;
- l'élément d'échangeur (1-301) étant **caractérisé en ce que** la plaque (2 ; 102 ; 202 ; 302), au moins une partie des nervures (4 ; 104 ; 204 ; 304.1, 304.2, 324.1, 324.2, 344.1, 344.2) et au moins une partie des barres de fermeture (8.1,8.3 ; 108.1, 108.2, 108.3, 108.4 ; 208.1, 208.3, 208.4 ; 308) sont monoblocs
- des premières nervures (4) s'étendent, en saillie sur au moins une première face de la plaque (2), parallèlement entre elles de façon à former des parois de canaux dits d'échange (6) parallèles entre eux,
**caractérisé en ce que** des deuxièmes nervures (105 ; 205) sont agencées en saillie sur la première face de la plaque (102 ; 202), de façon à former des parois de deuxièmes canaux dits canaux de distribution (107 ; 207), de sorte que les canaux de distribution (107 ; 207) s'étendent transversalement aux canaux d'échange (106 ; 206).

2. Élément d'échangeur (1 ; 101 ; 201 ; 301) selon la revendication 1, dans lequel la plaque (2 ; 102 ; 202 ; 302), toutes les nervures (4 ; 104 ; 204 ; 304.1) et toutes les barres de fermeture (8.1 : 308) sont monoblocs.

3. Élément d'échangeur (101 ; 201 ; 301) selon l'une des revendications précédentes, dans lequel la plaque (102; 202; 302) a globalement la forme d'un rectangle, l'élément d'échangeur (101 ; 201 ; 301) comportant quatre barres de fermeture (108.1 : 308) s'étendant respectivement le long des quatre bords de la plaque (102 ; 202 ; 302).

4. Élément d'échangeur (1 ; 101 ; 201) selon l'une des revendications précédentes, dans lequel une seule face de la plaque (2 ; 102 ; 202) comporte des nervures (4 ; 104 ; 204).

5. Élément d'échangeur (301) selon l'une des revendications 1 à 3, dans lequel les deux faces de la plaque (302) comportent des nervures (304.1, 304.2, 324.1, 324.2, 344.1, 344.2).

6. Élément d'échangeur (301) selon la revendication 5, dans lequel les nervures (304.1, 324.1, 344.1) de la première face sont décalées par rapport aux nervures (304.2, 324.2, 344.2) de la deuxième face, les nervures (304.1, 304.2, 324.1, 324.2, 344.1, 344.2) étant de préférence uniformément répartis sur chaque face.

7. Élément d'échangeur (1) selon l'une des revendications précédentes, dans lequel chaque nervure (4) a une largeur (W4) comprise entre 0,3 mm et 1,6 mm, de préférence entre 0,4 mm et 1,5 mm, chaque nervure (4) a une hauteur (H4) comprise entre 0,8 mm et 2,7 mm, de préférence entre 1,0 mm et 2,5 mm, dans lequel la plaque (2) a une épaisseur (E2) comprise entre 0,6 mm et 1,7 mm, de préférence entre 0,8 mm et 1,5 mm.

8. Élément d'échangeur (1 ; 101 ; 201 ; 301) selon l'une des revendications précédentes, dans lequel le matériau formant la plaque (2 ; 102 ; 202 ; 302), les nervures (4 : 344.2) et les barres de fermeture (8.1 : 308) monoblocs est sélectionné dans le groupe constitué par du cuivre, des alliages de cuivre, d'un acier inoxydable, de l'aluminium, les alliages d'aluminium en particulier de nuance 3003, 3004, 3104 et 3005, .les alliages de brasage plaqués 4004, 4104, 4343, 4045, 4047A et leur association avec ceux de la famille 3000.

9. Élément d'échangeur (1) selon l'une des revendications précédentes, dans lequel les canaux de distribution (107; 207) s'étendant de préférence suivant des angles compris entre 45° et 90° par rapport aux canaux d'échange (106 ; 206).

10. Élément d'échangeur (301) selon l'une des revendications 1 à 3 ou 5 à 9 dans lequel :
- la première face de la plaque (302) comporte des nervures (304.1) formant des parois de canaux d'échange (306) parallèles ; et
- la deuxième face de la plaque (302) comporte i) des nervures (304.2) formant des parois de canaux d'échange (326) ainsi que ii) des nervures formant des parois de canaux de distribution transversaux aux canaux d'échange (326).

11. Échangeur de chaleur (300), pour une unité de séparation de gaz par cryogénie, comprenant plusieurs éléments d'échangeur (301, 321, 341), comportant au moins une plaque (302, 322, 342), empilés et solidarisés entre eux, par exemple au moyen de brasure, de sorte que les plaques (302) s'étendent parallèlement entre elles, l'échangeur de chaleur (300) étant **caractérisé en ce qu'**il comprend plusieurs éléments d'échangeur (301, 321, 341) selon l'une des revendications précédentes, de préférence tous les éléments d'échangeur (301, 321, 341) sont selon l'une des revendications précédentes.

12. Échangeur de chaleur (300) selon la revendication 11, dans lequel des éléments d'échangeur (301, 321, 341) selon la revendication 9 sont empilés en alternance avec des éléments d'échangeur (1 ; 101 ; 201 ; 301) selon la revendication 10 ou 11.

13. Procédé de fabrication, pour fabriquer un élément d'échangeur (1 ; 101 ; 201 ; 301) selon l'une des revendications 1 à 11, pour un échangeur de chaleur (300) destiné à transférer de la chaleur d'au moins un fluide primaire dit fluide calorigène vers au moins un fluide secondaire dit fluide frigorigène, le procédé de fabrication comprenant les étapes :
- apposer un masque ;
- plonger les plaques dans les bains d'usinage chimique ;
- presser et déplacer un outil contre au moins une première face de l'ébauche de plaque avec une pression permettant de déformer plastiquement l'ébauche de plaque, de façon à former des premières nervures parallèles (4 : 344.2), formant des parois des canaux d'échange, qui s'étendent en saillie sur au moins une première face d'une plaque (2 ; 102 ; 202 ; 302) issue de l'ébauche de plaque ;
- presser et déplacer l'outil contre ladite au moins une première face de l'ébauche de plaque, de façon à former des deuxièmes nervures formant des parois des canaux de distribution ; et
- déformer plastiquement l'ébauche de plaque, de façon à former des barres de fermeture (8 ; 108 ; 208 ; 308) s'étendant suivant des bords de la plaque (2 ; 102 ; 202 ; 302) issue de l'ébauche de plaque.

## Patentansprüche

1. Tauscherelement (1; 101; 201; 301, 321, 341) für Wärmetauscher (300), der dazu bestimmt ist, Wärme aus zumindest einer Primärflüssigkeit, die Erwärmungsmittel genannt wird, auf zumindest eine Sekundärflüssigkeit zu übertragen, die Kältemittel genannt wird, wobei das Tauscherelement (1; 101; 201; 301) Folgendes umfasst:
- zumindest eine Platte (2; 102; 202; 302, 322, 342), die voll ist;
- Rippen (4; 104; 204; 304.1, 304.2, 324.1, 324.2, 344.1, 344.2), die sich überstehend über zumindest eine Seite der Platte (2; 102; 202; 302) erstrecken, wobei jede Rippe (4; 104; 204; 304.1) zumindest einen Abschnitt einer Wandung eines jeweiligen Kanals (6; 106; 206; 306, 326, 346) bildet, der für den Ablauf von Erwärmungsmittel oder Kältemittel angepasst ist; und
- Abschlussbalken (8.1, 8.3; 108.1, 108.2, 108.3, 108.4; 208.1, 208.3, 208.4; 308), die sich entlang der Ränder der Platte (2; 102; 202; 302) erstrecken, um zumindest einen Teil der Kanäle (6; 106; 206; 306) zu verschließen;
- wobei das Tauscherelement (1-301) **dadurch gekennzeichnet ist, dass** die Platte (2; 102; 202; 302), zumindest ein Teil der Rippen (4; 104; 204; 304.1, 304.2, 324.1, 324.2, 344.1, 344.2) und zumindest ein Teil der Abschlussbalken (8.1, 8.3; 108.1, 108.2, 108.3, 108.4; 208.1, 208.3, 208.4; 308) in einem Stück ausgeführt sind
- sich erste Rippen (4) über zumindest eine erste Seite der Platte (2) überstehend, parallel zueinander erstrecken, um Wandungen von Kanälen zu bilden, die Tauschkanäle (6) genannt werden, die parallel zueinander stehen,
**dadurch gekennzeichnet, dass** zweite Rippen (105; 205) über die erste Seite der Platte (102; 202) überstehend angeordnet sind, um Wandungen von zweiten Kanälen zu bilden, die Verteilerkanäle (107; 207) genannt werden, sodass sich die Verteilerkanäle (107; 207) querlaufend zu den Tauschkanälen (106; 206) erstrecken.

2. Tauscherelement (1; 101; 201; 301) nach Anspruch 1, wobei die Platte (2; 102; 202; 302), alle Rippen (4; 104; 204; 304.1) und alle Abschlussbalken (8.1: 308) in einem Stück ausgeführt sind.

3. Tauscherelement (101; 201; 301) nach einem der vorhergehenden Ansprüche, wobei die Platte (102; 202; 302) im Allgemeinen die Form eines Rechtecks aufweist, das Tauscherelement (101; 201; 301) vier Abschlussbalken (108.1: 308) umfasst, die sich jeweils entlang der vier Ränder der Platte (102; 202; 302) erstrecken.

4. Tauscherelement (1; 101; 201) nach einem der vorhergehenden Ansprüche, wobei eine einzige Seite der Platte (2; 102; 202) Rippen (4; 104; 204) umfasst.

5. Tauscherelement (301) nach einem der Ansprüche 1 bis 3, wobei die beiden Seiten der Platte (302) Rippen (304.1, 304.2, 324.1, 324.2, 344.1, 344.2) umfassen.

6. Tauscherelement (301) nach Anspruch 5, wobei die Rippen (304.1, 324.1, 344.1) der ersten Seite im Verhältnis zu den Rippen (304.2, 324.2, 344.2) der zweiten Seite versetzt sind, wobei die Rippen (304.1, 304.2, 324.1, 324.2, 344.1, 344.2) vorzugsweise auf jeder Seite gleichmäßig verteilt sind.

7. Tauscherelement (1) nach einem der vorhergehenden Ansprüche, wobei jede Rippe (4) eine Breite (W4) zwischen 0,3 mm und 1,6 mm, vorzugsweise zwischen 0,4 mm und 1,5 mm aufweist, jede Rippe (4) eine Höhe (H4) zwischen 0,8 mm und 2,7 mm, vorzugsweise zwischen 1,0 mm und 2,5 mm aufweist, wobei die Platte (2) eine Dicke (E2) zwischen 0,6 mm und 1,7 mm, vorzugsweise zwischen 0,8 mm und 1,5 mm aufweist.

8. Tauscherelement (1; 101; 201; 301) nach einem der vorhergehenden Ansprüche, wobei das Material, das die in einem Stück ausgeführte Platte (2; 102; 202; 302), Rippen (4: 344.2) und Abschlussbalken (8.1: 308) bildet, aus der Gruppe ausgewählt wird, die aus Kupfer, Kupferlegierungen, einem nichtrostenden Stahl, Aluminium, Aluminiumlegierungen, insbesondere mit der Nuance 3003, 3004, 3104 und 3005, aus plattierten Lötlegierungen 4004, 4104, 4343, 4045, 4047A und deren Verbindung mit jenen der Gruppe 3000 besteht.

9. Tauscherelement (1) nach einem der vorhergehenden Ansprüche, wobei sich die Verteilerkanäle (107; 207) vorzugsweise in Winkeln zwischen 45° und 90° im Verhältnis zu den Tauschkanälen (106; 206) erstrecken.

10. Tauscherelement (301) nach einem der Ansprüche 1 bis 3 oder 5 bis 9, wobei:
- die erste Seite der Platte (302) Rippen (304.1) umfasst, die parallele Tauschkanalwandungen (306) bilden; und
- die zweite Seite der Platte (302) i) Rippen (304.2) umfasst, die Tauschkanalwandungen (326) bilden, sowie ii) Rippen, die Verteilerkanalwände bilden, die quer zu den Tauschkanälen (326) verlaufen.

11. Wärmetauscher (300) für eine Gastrennungseinheit durch Kältetechnik, mehrere Tauscherelemente (301, 321, 341) umfassend, die zumindest eine Platte (302, 322, 342) umfassen, die gestapelt und beispielsweise durch Verlöten fest miteinander verbunden sind, sodass sich die Platten (302) parallel zueinander erstrecken, wobei der Wärmetauscher (300) **dadurch gekennzeichnet ist, dass** er mehrere Tauscherelemente (301, 321, 341) nach einem der vorhergehenden Ansprüche umfasst, und vorzugsweise alle Tauscherelemente (301, 321, 341) nach einem der vorhergehenden Ansprüche sind.

12. Wärmetauscher (300) nach Anspruch 11, wobei Tauscherelemente (301, 321, 341) nach Anspruch 9 abwechselnd mit den Tauscherelementen (1; 101; 201; 301) nach Anspruch 10 oder 11 gestapelt sind.

13. Herstellungsverfahren zum Herstellen eines Tauscherelements (1; 101; 201; 301) nach einem der Ansprüche 1 bis 11, für einen Wärmetauscher (300), der dazu bestimmt ist, Wärme aus zumindest einer Primärflüssigkeit, die Erwärmungsmittel genannt wird, auf zumindest eine Sekundärflüssigkeit zu übertragen, die Kältemittel genannt wird, wobei das Herstellungsverfahren die folgenden Schritte umfasst:
- Aufbringen einer Maske;
- Eintauchen der Platten in chemische Bearbeitungsbäder;
- Andrücken und Verfahren eines Werkzeugs an zumindest einer ersten Seite des Plattenrohlings mit einem Druck, der es ermöglicht, das Plattenrohteil plastisch zu verformen, um erste parallele Rippen (4: 344.2) zu bilden, die Wandungen der Tauschkanäle bilden, die sich überstehend über zumindest eine erste Seite einer Platte (2; 102; 202; 302) aus dem Plattenrohteil erstrecken;
- Andrücken und Verfahren des Werkzeugs an der besagten zumindest einen ersten Seite des Plattenrohlings, um zweite Rippen zu bilden, die Wandungen der Verteilerkanäle bilden; und
- Plastisches Verformen des Plattenrohlings, um Abschlussbalken (8; 108; 208; 308) zu bilden, die sich entlang der Ränder der Platte (2; 102; 202; 302) aus dem Plattenrohling erstrecken.

## Claims

1. Exchanger element (1; 101; 201; 301, 321, 341), for a heat exchanger (300) intended to transfer heat from at least one primary fluid, called calorigenic fluid, to at least one secondary fluid, called refrigerant, the exchanger element (1; 101; 201; 301) comprising:
- at least one plate (2; 102; 202; 302, 322, 342) that is solid;
- ribs (4; 104; 204; 304.1, 304.2, 324.1, 324.2, 344.1, 344.2) that protrude on at least one face of the plate (2; 102; 202; 302), each rib (4; 104; 204; 304.1) forming at least one portion of a wall of a respective channel (6; 106; 206; 306, 326, 346) suitable for the flow of calorigenic fluid or refrigerant; and
- closing bars (8.1, 8.3; 108.1, 108.2, 108.3, 108.4; 208.1, 208.3, 208.4; 308) extending along edges of the plate (2; 102; 202; 302) in such a way as to plug at least a portion of the channels (6; 106; 206; 306);
- the exchanger element (1-301) being **characterised in that** the plate (2; 102; 202; 302), at least a portion of the ribs (4; 104; 204; 304.1, 304.2, 324.1, 324.2, 344.1, 344.2) and at least a portion of the closing bars (8.1, 8.3; 108.1, 108.2, 108.3, 108.4; 208.1, 208.3, 208.4; 308) form a single piece,
- first ribs (4) extend, protruding on at least one first face of the plate (2), in parallel in such a way as to form walls of parallel channels called exchange channels (6), ch
aracterised **in that** second ribs (105; 205) are arranged protruding on the first face of the plate (102; 202) in such a way as to form walls of second channels called distribution channels (107; 207) in such a way that the distribution channels (107; 207) extend transversely to the exchange channels (106; 206).

2. Exchanger element (1; 101; 201; 301) according to claim 1, wherein the plate (2; 102; 202; 302), all the ribs (4; 104; 204; 304.1) and all the closing bars (8.1: 308) form a single piece.

3. Exchanger element (101; 201; 301) according to one of the previous claims,
wherein the plate (102; 202; 302) generally has the shape of a rectangle, the exchanger element (101; 201; 301) comprising four closing bars (108.1: 308) extending along the four edges of the plate (102; 202; 302), respectively.

4. Exchanger element (1; 101; 201) according to one of the previous claims, wherein a single face of the plate (2; 102; 202) comprises ribs (4; 104; 204).

5. Exchanger element (301) according to one of claims 1 to 3, wherein both faces of the plate (302) comprise ribs (304.1, 304.2, 324.1, 324.2, 344.1, 344.2).

6. Exchanger element (301) according to claim 5, wherein the ribs (304.1, 324.1, 344.1) of the first face are offset with respect to the ribs (304.2, 324.2, 344.2) of the second face, the ribs (304.1, 304.2, 324.1, 324.2, 344.1, 344.2) preferably being uniformly distributed on each face.

7. Exchanger element (1) according to one of the previous claims, wherein each rib (4) has a width (W4) between 0.3 mm and 1.6 mm, preferably between 0.4 mm and 1.5 mm, each rib (4) has a height (H4) between 0.8 mm and 2.7 mm, preferably between 1.0 mm and 2.5 mm, wherein the plate (2) has a thickness (E2) between 0.6 mm and 1.7 mm, preferably between 0.8 mm and 1.5 mm.

8. Exchanger element (1; 101; 201; 301) according to one of the previous claims,
wherein the material forming the plate (2; 102; 202; 302), the ribs (4: 344.2) and the closing bars (8.1: 308) in a single piece is selected from the group consisting of copper, copper alloys, a stainless steel, aluminium, aluminium alloys, in particular grades 3003, 3004, 3104 and 3005, the plated brasing alloys 4004, 4104, 4343, 4045 and 4047A and the combination thereof with the alloys of the 3000 family.

9. Exchanger element (1) according to one of the previous claims, wherein the distribution channels (107; 207) preferably extending at angles between 45° and 90° with respect to the exchange channels (106; 206).

10. Exchanger element (301) according to one of claims 1 to 3 or 5 to 9, wherein:
- the first face of the plate (302) comprises ribs (304.1) forming walls of parallel exchange channels (306); and
- the second face of the plate (302) comprises i) ribs (304.2) forming walls of exchange channels (326) and ii) ribs forming walls of distribution channels transverse to the exchange channels (326).

11. Heat exchanger (300) for a unit for gas separation via cryogenics, comprising a plurality of exchanger elements (301, 321, 341) comprising at least one plate (302, 322, 342) and stacked and rigidly connected to each other, for example via a brase, in such a way that the plates (302) extend in parallel to each other, the heat exchanger (300) being **characterised in that** said heat exchanger comprises a plurality of exchanger elements (301, 321, 341) according to one of the previous claims, preferably all the exchanger elements (301, 321, 341) are according to one of the previous claims.

12. Heat exchanger (300) according to claim 11, wherein exchanger elements (301, 321, 341) according to claim 9 are stacked in alternation with exchanger elements (1; 101; 201; 301) according to claim 10 or 11.

13. Manufacturing method for manufacturing an exchanger element (1; 101; 201; 301) according to one of claims 1 to 11 for a heat exchanger (300) intended to transfer heat from at least one primary fluid, called calorigenic fluid, to at least one secondary fluid, called refrigerant, the manufacturing method comprising the steps:
- placing a mask;
- immersing the plates in the chemical milling baths;
- pressing and moving a tool against at least a first face of the plate blank with a pressure allowing the plate blank to be deformed plastically, in such a way as to form first parallel ribs (4: 344.2) forming walls of the exchange channels and protruding on at least one first face of a plate (2; 102; 202; 302) made from the plate blank;
- pressing and moving the tool against said at least one first face of the plate blank in such a way as to form second ribs forming walls of the distribution channels; and
- plastically deforming the plate blank in such a way as to form closing bars (8; 108; 208; 308) extending along edges of the plate (2; 102; 202; 302) made from the plate blank.
